# EUROPÄISCHE PATENTSCHRIFT

(11) **EP 3 353 039 B1**
(45) Veröffentlichungstag und Bekanntmachung des Hinweises auf die Patenterteilung: **22.12.2021**
(21) Anmeldenummer: 16766528.0
(22) Anmeldetag: 12.09.2016
(51) Int. Cl.: B62D 1/06

(54) **VERFAHREN ZUM HERSTELLEN EINES VERKLEIDETEN LENKRADS FÜR EIN FAHRZEUG SOWIE MIT DEM VERFAHREN HERSTELLBARES LENKRAD**
METHOD FOR PRODUCING A COVERED STEERING WHEEL FOR A VEHICLE, AND STEERING WHEEL THAT CAN BE PRODUCED BY MEANS OF THE METHOD
PROCÉDÉ DE FABRICATION D'UN VOLANT DE DIRECTION REVÊTU POUR UN VÉHICULE, ET VOLANT DE DIRECTION POUVANT ÊTRE FABRIQUÉ AU MOYEN DE CE PROCÉDÉ

(30) Priorität: 24.09.2015 DE 102015218424
(43) Veröffentlichungstag der Anmeldung: 01.08.2018
(73) Patentinhaber: Volkswagen Aktiengesellschaft, 38440 Wolfsburg (DE)
(72) Erfinder: ZLATKOV, Branislav, 38104 Braunschweig (DE); DANSCHACHER, Markus, 38110 Braunschweig (DE); SOLTENDIECK, Bernd, 38108 Braunschweig (DE); OELBKE, Henrik, 38553 Wasbüttel (DE); RICHTER, Thorsten, 38165 Lehre (DE)
(86) Internationale Anmeldenummer: PCT/EP2016/071457
(87) Internationale Veröffentlichungsnummer: WO 2017/050603

(56) Entgegenhaltungen:
- EP-A2- 1 964 751
- JP-A- S6 011 572
- JP-A- 2014 094 728
- US-A- 5 840 144
- US-A1- 2008 105 077
- US-A1- 2013 276 573

## Beschreibung

Die Erfindung betrifft ein Verfahren zum Herstellen eines verkleideten Lenkrads für ein Fahrzeug, insbesondere für ein Kraftfahrzeug.

Bekannte Lenkräder umfassen ein oft metallisches oder aus Hartkunststoff bestehendes Lenkradskelett, das von einer raumausfüllenden Matrix, zumeist einem Kunststoffschaum, eingehüllt ist. In der Regel definiert das Matrixmaterial die funktionale geometrische Form des Lenkrads. Als abschließende sichtbare Schicht umhüllt zumeist eine Verkleidung die Matrix, beispielsweise aus Leder oder Kunstleder oder einem Textil.

Zur Herstellung wird üblicherweise das Verkleidungsmaterial auf das entsprechende Endmaß zugeschnitten und maschinell zu einem Ring zusammengenäht, wobei ein Längsschlitz noch offen bleibt. Dann wird manuell ein Kleber auf das umspritzte Lenkrad oder auf die Nichtsichtseite des Verkleidungsmaterials aufgebracht, das Lenkrad bezogen und die Längsnaht manuell durch Vernähen geschlossen.

DE 6943597 U und DE 1922356 U beschreiben, die Längsnaht von einer abnehmbaren Lenkradhülle durch einen oder mehrere Reißverschlüsse zu schließen.

DE 10 2010 029 188 A1 beschreibt ein Verfahren zum Herstellen eines Lenkrads für ein Kraftfahrzeug, wobei das Lenkradskelett mit einem Verkleidungsmaterial umhüllt wird, um sodann den Raum zwischen Verkleidungsmaterial und Lenkradskelett mit einem raumfüllenden Mantelmaterial auszuschäumen.

US 2013/276573 A1, EP 1 964 751 A2 und US 2008/105077 A1 beschreiben Verfahren zum Herstellen eines verkleideten Lenkrads für ein Fahrzeug, bei denen ein Verkleidungsmaterial auf seiner Nichtsichtseite mit einem thermisch aktivierbaren Material beschichtet und auf ein mit einem Matrixmaterial umspritzten Lenkradskelett aufgebracht wird. Anschließend erfolgt ein Verbinden von Längsrändern des Verkleidungsmaterials und ein Aktivieren des aktivierbaren Materials unter Erzeugung einer stoffschlüssigen Verbindung zwischen dem Verkleidungsmaterial und dem Matrixmaterial.

Aus JP 2014-94728 A ist bekannt, die Längsnaht eines Lenkradbezugs mittels eines zahnlosen Reißverschlusses vom Gleittyp zu schließen. Der Lenkradbezug weist auf einer Innenseite eine elastische Schaumschicht auf, die mittels einer Klebeschicht mit dem Bezugsmaterial verbunden ist und die durch Schließen des Reißverschlusses komprimiert wird.

US 5 840 144 A beschreibt ein Verfahren zum Herstellen eines mit Holzfurnier verkleideten Lenkrads. Hierzu wird ein das Lenkradskelett umgebendes Kunststoffmaterial auf seiner Außenfläche mit einem aufschäumbaren feuchtigkeitsreaktiven Klebstoff beschichtet. Anschließend werden vorgeformte Halbschalen des Holzfurniers auf die mit dem Klebstoff versehene Oberfläche aufgebracht.

JP S60 11572 A beschreibt ein Verfahren, um in Hohlkörpern von Lenkrädern befindliche Schweiß- oder Schneidabfälle zu fixieren. Dafür wird ein rundes Rohr durch ein Biegeverfahren annähernd vollständig in die kreisrunde Form eines Lenkrads gebracht. Anschließend wird eine Düse in eines der beiden offenen Enden des Rohrs eingeführt. Eine heiße Schmelze wird mittels eines Verteilers dem Hohlraum des Rohrs zugeführt und gelangt so in dessen Innenraum. Im Anschluss erfolgt das Verschweißen der beiden offenen Enden. Es bildet sich aus der Schmelze eine Schicht im Inneren des Rohres, die mit Hilfe ihrer Klebeeigenschaften die Schneid- und Schweißabfälle fixiert.

Andere Verfahren zum Herstellen eines verkleideten Lenkrads für ein Fahrzeug sind aus den

Druckschriften DE 10 2007 031 014 A1, DE 10 2010 027 157 A1, DE 10 2010 063 440 A1 JPH0459476A, WO0206108A1 und EP 1 964 751 A2 bekannt.

Aufgabe der vorliegenden Erfindung ist, ein Verfahren zum Herstellen eines verkleideten Lenkrads für ein Fahrzeug zur Verfügung zu stellen, das zu reproduzierbaren Ergebnissen führt und schnell und kostengünstig und vorzugsweise mit einem Mindestmaß an manuellen Arbeitsschritten durchführbar ist.

Diese Aufgaben werden ganz oder teilweise durch ein Verfahren sowie ein Lenkrad mit den Merkmalen der unabhängigen Ansprüche gelöst.

Das erfindungsgemäße Verfahren zum Herstellen eines verkleideten Lenkrads für ein Fahrzeug, insbesondere für ein Kraftfahrzeug, umfasst die Schritte:
- Bereitstellen eines mit einem Matrixmaterial umspritzten Lenkradskeletts,
- Beschichten (Kaschieren) eines Verkleidungsmaterials auf seiner Nichtsichtseite mit einem aktivierbaren Material, wobei es sich bei dem Verkleidungsmaterial um Leder, Kunstleder oder ein Textilmaterial handelt,
- Aufbringen des beschichteten Verkleidungsmaterials auf das umspritzte Lenkradskelett, sodass seine Nichtsichtseite dem umspritzten Lenkradskelett zugewandt ist,
- Verbinden von Längsrändern des Verkleidungsmaterials miteinander, und
- Aktivieren des aktivierbaren Materials unter Erzeugung einer stoffschlüssigen Verbindung zwischen dem Verkleidungsmaterial und dem Matrixmaterial,
wobei das aktivierbare Material ein aufschäumbares Material ist, das bei der Aktivierung aufschäumt.

Durch die Erzeugung einer stoffschlüssigen Verbindung zwischen Verkleidungsmaterial und dem das Lenkradskelett umhüllenden Matrixmaterial wird eine zuverlässige Haftung erzielt, die gegebenenfalls sogar ein separates Schließen einer Längsnaht des Verkleidungsmaterials entbehrlich werden lässt. Indem die stoffschlüssige Verbindung mittels des das Verkleidungsmaterial beschichtenden aktivierbaren Materials erfolgt, wird eine äußerst reproduzierbare Verbindung im Hinblick auf Festigkeit und Schichtdicke erhalten.

Im Rahmen der Erfindung wird unter einem "aktivierbaren Material" jegliches Material verstanden, welches in der Lage ist, in einem geeigneten nachfolgenden Behandlungsschritt (dem Aktivierungsschritt), beispielsweise durch thermische Einwirkung, eine stoffschlüssige Verbindung mit dem Matrixmaterial zu erzeugen. Mit anderen Worten weist das aktivierbare Material zum Zeitpunkt seiner Beschichtung und zum Zeitpunkt des Aufbringens des beschichteten Verkleidungsmaterials auf das umspritzte Lenkradskelett noch keine oder nur geringe haftende, beispielsweise klebende Eigenschaften auf. Diese treten erst bei dem nachfolgenden Aktivierungsschritt in vollem Umfang zutage. Dieses erleichtert und beschleunigt das Aufbringen des beschichteten Verkleidungsmaterials auf das umspritzte Lenkradskelett und damit die Herstellung der haftenden Verbindung.

In bevorzugter Ausgestaltung der Erfindung ist das aktivierbare Material ein aktivierbarer Klebstoff, und die stoffschlüssige Verbindung ist eine Klebeverbindung. Als aktivierbarer Klebstoff kommen beispielsweise thermisch aktivierbare Schmelzkleber infrage. Vorteil aktivierbarer Klebstoffe ist, dass für diese eine Vielzahl geeigneter Produkte verfügbar sind und automatisierbare Techniken für ihre Verarbeitung zur Verfügung stehen.

Erfindungsgemäß ist das aktivierbare Material ein aufschäumbares Material, das bei seiner Aktivierung aufschäumt, also einen Schaumstoff ausbildet. Vorteil eines aufschäumbaren Materials ist, dass dieses während der Aufschäumung expandiert und somit Zwischenräume ausfüllt und Fertigungstoleranzen des Untergrunds ausgleicht. Zudem werden die haptischen Eigenschaften des Lenkrads verbessert. Es versteht sich, dass auch das aufschäumbare Material eine stoffschlüssige Verbindung herstellt, indem beispielsweise ein aufschäumbarer aktivierbarer Klebstoff verwendet wird. Geeignete aufschäumbare Materialien umfassen beispielsweise aushärtbare Polyurethanzusammensetzungen (PU-Zusammensetzungen).

Das aktivierbare Material kann in verschiedener Form auf das Verkleidungsmaterial aufgebracht werden, beispielsweise als Pulver, Folie, Vlies (insbesondere Spinnvlies), Netz, Paste und/oder Flüssigkeit. Demzufolge kommen unterschiedliche Beschichtungstechniken, insbesondere Kaschier- und/oder Laminiertechniken, infrage. Das Aufbringen des aktivierbaren Materials auf das Verkleidungsmaterial erfolgt bevorzugt maschinell, insbesondere maschinell und automatisiert, um die Kosten des Aufbringens zu senken und die Qualität sicherzustellen.

Das Aktivieren des aktivierbaren Materials kann auf beliebige Weise erfolgen, die sich weitestgehend in Abhängigkeit des verwendeten aktivierbaren Materials bestimmt. Beispielsweise kann die Aktivierung eine thermische Behandlung, eine chemische Behandlung, eine Bestrahlung und/oder eine Druckeinwirkung umfassen. Vorzugsweise erfolgt das Aktivieren durch thermische Behandlung und/oder Bestrahlung, insbesondere IR-Bestrahlung, da diese Prozesse einfach und schnell umzusetzen sind und sich gut in automatisierten Verfahren integrieren lassen.

Das Verkleidungsmaterial sollte zum Zeitpunkt seines Aufbringens auf das umspritzte Lenkradskelett auf das erforderliche Endmaß zugeschnitten (konfektioniert) sein. Das Zuschneiden kann dabei vor oder nach dem Beschichten mit dem aktivierbaren Material erfolgen. Vorzugsweise erfolgt das Zuschneiden nach dem Beschichten mit dem aktivierbaren Material, da auf diese Weise der Beschichtungsprozess einfacher zu automatisieren ist, beispielsweise im Rahmen eines Rollenprozesses oder dergleichen.

In einigen Fällen ist es sinnvoll, dass das Verkleidungsmaterial aus mehreren Längssegmenten zusammengesetzt ist. In diesen Fällen werden die einzelnen Segmente vor dem Aufbringen auf das umspritzte Lenkradskelett zu einem geschlossenen Ring, dessen Längsverbindung jedoch noch nicht geschlossen ist, verbunden, insbesondere miteinander vernäht (zusammengenäht).

Das Lenkradskelett wird vor dem Aufbringen des beschichteten Verkleidungsmaterials zumindest abschnittsweise mit einem Matrixmaterial umspritzt und/oder umschäumt. Insbesondere erfolgt in diesem Schritt die Ausbildung einer formgebenden Matrix, welche das Lenkradskelett zumindest abschnittsweise einbettet und die gewünschte Geometrie des Lenkrads insbesondere auch in Hinblick auf seine Funktionalität und ergonomische Eigenschaften definiert. Das Umspritzen des Lenkradskeletts erfolgt dabei in den meisten Fällen mit lokal unterschiedlicher Matrixmaterialdicke und/oder nicht vollständig; beispielsweise wird im Allgemeinen die Lenkradnabe und in einigen Fällen auch die Lenkradspeichen nur dünn oder gar nicht umspritzt, so dass nur der Lenkradkranz mit dem Matrixmaterial in einer dickeren Materialschicht umspritzt wird. In bevorzugter Ausführung der Erfindung umfasst das Bereitstellen des mit einem Matrixmaterial umspritzten Lenkradskeletts ein Umschäumen des Lenkradskeletts mit dem Matrixmaterial. Das Umschäumen ist eine Sonderform des Umspritzens. Auch für das aufschäumbare Matrixmaterial kommen beispielsweise PU-Schäume oder physikalisch aufschäumbare Materialien infrage.

Zusätzlich zu dem Verkleidungsmaterial kann auch das Matrixmaterial auf seiner Außenseite vor dem Aufbringen des Verkleidungsmaterials mit einem aktivierbaren Material beschichtet werden. Es kann sich um das gleiche aktivierbare Material handeln wie das auf das Verkleidungsmaterial aufgebrachte aktivierbare Material. Je nach Materialkombination kann es aber auch sinnvoll sein, für die Beschichtung des Matrixmaterials ein aktivierbares Material zu verwenden, das von dem aktivierbaren Material des Verkleidungsmaterials abweicht, aber mit diesem chemisch kompatibel ist und beispielsweise die Klebewirkung des aktivierbaren Materials des Verkleidungsmaterials unterstützt. Das aktivierbare Material des Matrixmaterials kann vollfächig auf dieses aufgebracht sein; es kann aber auch ausreichend oder vorteilhaft sein, das aktivierbare Material nur stellenweise auf das Matrixmaterial aufzubringen. Beispielsweise kann die Klebewirkung des aktivierbaren Materials des Verkleidungsmaterials an geometrisch ungünstigen Stellen - zum Beispiel am Übergang der Lenkradspeichen in den Lenkradkranz - unter Umständen unzureichend sein; an derartigen Stellen kann zusätzlich ein chemisch komptables, aktivierbares Material auf die Außenseite des Matrixmaterials aufgebracht werden, um die Klebewirkung zu unterstützen.

Grundsätzlich ist es auch möglich, ausschließlich ein aktivierbares Material auf das Matrixmaterial aufzubringen, und auf ein Auftragen von aktivierbarem Material auf das Verkleidungsmaterial vor dem Umhüllen des mit dem Matrixmaterial umspritzten Lenkradskeletts zu verzichten. In diesem Falle wird statt des Verkleidungsmaterials das Matrixmaterial nach dem zumindest abschnittsweisen Umspritzen des Lenkradskeletts auf seiner Außenseite mit einem aktivierbaren Material beschichtet, und das Verkleidungsmaterial wird auf das mit dem beschichteten Matrixmaterial umspritzte Lenkradskelett aufgebracht, so dass die beschichtete Außenseite des Matrixmaterials dem Verkleidungsmaterial zugewandt ist. Die übrigen Verfahrensschritte des erfindungsgemäßen Verfahrens bleiben unverändert. Allerdings ist es verfahrenstechnisch einfacher, das flächige, im Wesentlichen zweidimensional geformte Verkleidungsmaterial vor seinem Aufbringen auf das umspritzte Lenkradskelett mit einem aktivierbaren Material zu beschichten, als das dreidimensional geformte Matrixmaterial nach dem zumindest abschnittsweisen Umspritzen des Lenkradskeletts mit einem aktivierbaren Material zu beschichten.

Der Prozessschritt des Verbindens der Längsränder des aufgebrachten Verkleidungsmaterials kann beispielsweise Nähen, Kleben, Verschweißen der Längsränder miteinander und/oder dergleichen umfassen.

Gemäß einer bevorzugten Ausgestaltung des Verfahrens werden Reißverschlusshälften (Reißverschluss-Zahnreihen) an den Längsrändern des Verkleidungsmaterials vor dem Aufbringen mit angebracht, welche nach dem Aufbringen des beschichteten Verkleidungsmaterials auf das umspritzte Lenkradskelett geschlossen werden. Die Verwendung eines Reißverschlusses hat den Vorteil, dass sich das Verbinden der Längsränder des Verkleidungsmaterials sehr einfach und schnell gestaltet. Ferner können mittels des Reißverschlusses vorteilhafte optische Gestaltungseffekte erzielt werden.

Die Reißverschlusshälften können einteilig ausgebildet sein oder mehrere Segmente umfassen. Als besonders gut geeignet haben sich Spiralreißverschlüsse, insbesondere solche aus Kunststoff, erwiesen. Das Anbringen der Reißverschlusshälften an den Längsrändern kann durch Nähen, Verkleben und/oder Verschweißen erfolgen. Dabei können die Reißverschlusshälften so angebracht werden, dass der Reißverschluss im geschlossenen Zustand sichtbar bleibt oder, vorzugsweise, durch das Verkleidungsmaterial verdeckt wird, das heißt die Längsränder desselben nach dem Verschließen des Reißverschlusses auf Stoß oder überlappend liegen.

Der Reißverschluss kann auf dem inneren Umfang des Lenkradkranzes angebracht werden. In diesem Falle ist der Reißverschluss visuell wenig auffällig angeordnet, und seine Position entspricht im Wesentlichen der Lage von Nähten bei konventionell hergestellten und vernähten Reißverschlüssen. Allerdings stören in diesem Falle die Übergänge zwischen dem Lenkradkranz und den Lenkradspeichen, die sich im Allgemeinen ebenfalls am inneren Umfang des Lenkradkranzes befinden, die Verwendung eines den gesamten Bogenkreis des Lenkradkranzes durchlaufenden Reißverschlusses. Wird der Reißverschluss hingegen auf dem äußeren Umfang des Lenkradkranzes oder auf der - aus Sicht des Fahrzeuglenkers - vom Fahrzeuglenker abgewandten Rückseite des Lenkradkranzes angebracht, so ist im Allgemeinen die Verwendung eines den gesamten Bogenkreis des Lenkradkranzes durchlaufenden Reißverschlusses möglich. Auch in diesen Fällen ist der Reißverschluss visuell wenig auffällig am Lenkrad angeordnet.

Bei einer vorteilhaften Weiterbildung des Verfahrens werden nach dem Aufbringen des beschichteten Verkleidungsmaterials auf das umspritzte Lenkradskelett die Längsränder des Verkleidungsmaterials durch das Schließen von Reißverschlusshälften miteinander verbunden. Anschließend oder in einem späteren Verfahrensschritt werden durch einen Reißverschluss bereits miteinander verbundenen Längsränder zusätzlich durch Vernähen miteinander verbunden und ein Reißverschluss dabei übernäht. Da die Längsränder zum Zeitpunkt des Vernähens bereits durch einen Reißverschluss miteinander verbunden sind, gestaltet sich das Vernähen der Längsränder wesentlich einfacher und schneller als bisher. Beim Vernähen der Längsränder durch Übernähen eines Reißverschlusses müssen die Längsränder nämlich nicht mehr in Position gehalten werden, da diese bereits durch den Reißverschluss lagerichtig miteinander verbunden sind. Es ist möglich, einen verwendeten Reißverschluss durchgängig zu übernähen; je nach den geometrischen Verhältnissen am Lenkrad kann es aber auch vorteilhafter sein, einen verwendeten Reißverschluss mit mehreren gesonderten Nähten zu übernähen, und/oder ihn nur stellenweise zu übernähen.

In einer weiteren Ausbildung des Verfahrens weist das das Lenkradskelett umhüllende Matrixmaterial im Bereich der miteinander verbundenen Längsränder des Verkleidungsmaterials eine Ausnehmung auf, die sich also entlang der Verbindungsnaht erstreckt. Auf diese Weise wird eine durch die Verbindung entstehende Dickenerhöhung der Verkleidung durch die Ausnehmung aufgenommen, und es kommt zu keiner unerwünschten Auswölbung an der Verbindungsstelle. Dies ist insbesondere im Falle der Verwendung eines Reißverschlusses zum Verbinden der Längsränder vorteilhaft.

Weitere bevorzugte Ausgestaltungen der Erfindung ergeben sich aus den übrigen, in den Unteransprüchen oder in der Beschreibung genannten Merkmalen.

Ein weiterer Aspekt der vorliegenden Erfindung betrifft ein mit dem erfindungsgemäßen Verfahren herstellbares verkleidetes Lenkrad.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:

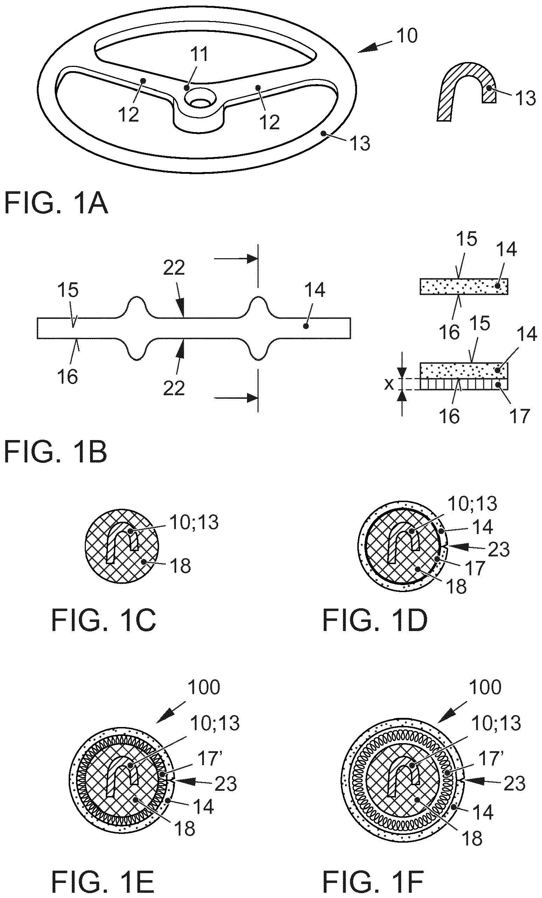

- Figur 1: Prozessablauf eines Verfahrens zum Herstellen eines Lenkrads nach einer ersten Ausgestaltung der Erfindung: (A) Lenkradskelett in perspektivscher Ansicht und als Schnittansicht; (B) Zuschnitt des Verkleidungsmaterials in Draufsicht und als Schnittansicht vor und nach Beschichtung; (C) Lenkradskelett (Querschnitt) mit umspritzter oder umschäumter Matrix; (D) Lenkrad nach Aufbringen und Verbinden des Verkleidungsmaterials, (E) fertiges Lenkrad nach Aktivieren des aktivierbaren Materials in einer ersten Ausführungsvariante und (F) fertiges Lenkrad nach Aktivieren des aktivierbaren Materials in einer zweiten Ausführungsvariante;

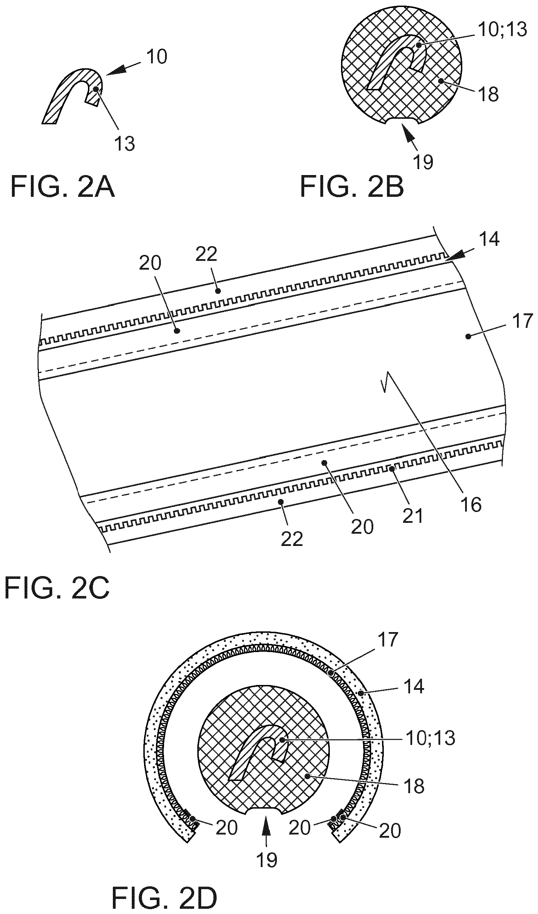

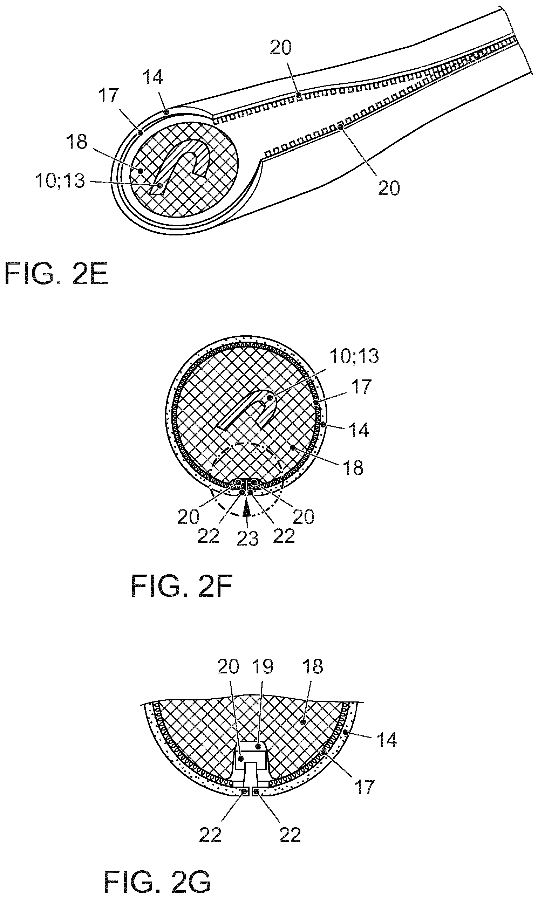

- Figur 2: Prozessablauf eines Verfahrens zum Herstellen eines Lenkrads nach einer zweiten Ausgestaltung der Erfindung: (A) Lenkradskelett in Schnittansicht; (B) Lenkradskelett mit umspritzter oder umschäumter Matrix; (C) beschichtetes Verkleidungsmaterial in Draufsicht mit Reißverschluss (D); Aufbringen des Verkleidungsmaterials, (E) Lenkrad mit teilweise geschlossenem Reißverschluss; (F) Schnittansicht des Lenkrads nach Schließen des Reißverschlusses in einer ersten Ausführungsvariante und (G) des Lenkrads nach Schließen des Reißverschlusses in einer zweiten Ausführungsvariante.

Nachfolgend soll der Prozessablauf einer ersten Ausgestaltung des erfindungsgemäßen Verfahrens zum Herstellen eines Lenkrads unter Bezugnahme auf Figur 1 anhand der Zwischenprodukte in verschiedenen Prozessstufen dargestellt werden.

Zunächst wird in einem ersten Schritt des Verfahrens ein in Figur 1A insgesamt mit 10 bezeichnetes Lenkradskelett bereitgestellt. Das Lenkradskelett 10 umfasst eine Lenkradnabe 11, von der eine beliebige Anzahl (hier: zwei) von Lenkradspeichen 12 radial ausgehen und in einen umlaufenden Lenkradkranz 13 übergehen. Auf der rechten Seite der Figur 1A ist der Lenkradkranz 13 in einer Schnittansicht gezeigt. Es ist erkennbar, dass der Lenkradkranz 13 in diesem Beispiel als ein im Wesentlichen U-förmiges Profil ausgebildet ist. Üblicherweise ist das Lenkradskelett aus einem metallischen Material hergestellt, beispielsweise Magnesium oder einer Magnesiumlegierung, und kann beispielsweise in einem Druckgussverfahren erhalten werden. Nachfolgend soll das Lenkradskelett 10, insbesondere der Lenkradkranz 13, mit einem Matrixmaterial umspritzt und mit einem Verkleidungsmaterial umhüllt werden.

In einem weiteren Schritt erfolgt ein Zuschneiden und Beschichten (Kaschieren) des Verkleidungsmaterials mit einem aktivierbaren Material. Figur 1B zeigt auf der linken Seite eine Draufsicht auf einen abgerollten Zuschnitt eines Verkleidungsmaterials 14. Als Verkleidungsmaterial dient erfindungsgemäß Leder, Kunstleder oder ein Textilmaterial beliebiger Art. Auf der rechten Seite der Figur 1B ist eine Schnittansicht des Verkleidungsmaterials 14 vor und nach seiner Beschichtung gezeigt. Das Verkleidungsmaterial weist eine Sichtseite 15 und eine Nicht-Sichtseite 16 auf. Das aktivierbare Material 17 wird auf die Nicht-Sichtseite 16 aufgebracht. Mit X ist eine Höhe, die Höhe der Beschichtung (Beschichtungsdicke) bezeichnet. Sie kann beliebig dick, beispielsweise 20 bis 2000 µm sein und ist abhängig von verschiedenen Anforderungen und dem eingesetzten Material etc.

Als aktivierbares Material 17 wird ein Material verwendet, das nach einer geeigneten Aktivierung (siehe unten) in der Lage ist, eine stoffschlüssige Verbindung zwischen dem Verkleidungsmaterial 14 sowie mit dem Matrixmaterial des umspritzten Lenkradkranzes 10 herzustellen. Vorzugsweise entwickelt das aktivierbare Material klebende Eigenschaften, das heißt, als aktivierbares Material 17 wird ein aktivierbarer Klebstoff, beispielsweise ein Schmelzklebstoff verwendet. Geeignete Schmelzklebstoffe umfassen beispielsweise Ethylen-Vinyl-Acetat (EVA), Ethylen-Vinyl-Acetat-Copolymere modifizierte Polyolefine, Polyester etc. Weitere geeignete Klebemassen umfassen Polyurethane, Polymere basierend auf Acrylat oder Acrylsäuremonomeren, Polyvinylalkohol, Silikone, synthetische Elastomere oder natürliche Gummizusammensetzungen. Besonders bevorzugt wird eine thermoplastische Polyurethanzusammensetzung (Mischung aus Polyol und Isocyanat) eingesetzt, die insbesondere als Pulver verwendet werden kann.

Die Beschichtungstechnik kann prinzipiell in beliebiger Weise ausgestaltet sein und hängt von der Art des aktivierbaren Materials 17 ab, insbesondere ob dieses in Form eines Pulvers, einer Schmelze, einer Lösung oder Dispersion, als bereits ausgebildete Schicht in Form einer Folie oder eines Netzes, eines Vlieses, beispielsweise Spinnvlieses, eingesetzt wird. Dementsprechend kommen Nass- und Trockenbeschichtung, Beschichtungen mit oder ohne Lösungsmittel, thermische Beschichtung und andere zum Einsatz. Liegt das aktivierbare Material 17 als Pulver, Lösung, Dispersion oder Schmelze vor, können Rakel- oder Sprühtechniken verwendet werden. Sofern das aktivierbare Material 17 bereits als eine Schicht in Form einer Folie oder eines Netzes oder dergleichen ausgebildet ist, kommen Laminier- oder Kaschiertechniken zum Einsatz, wobei das Material 17 auch auf einer Trägerfolie vorgesehen sein kann, um zu verhindern, dass das aktivierbare Material 17 vorzeitig verklebt. Diese Trägerfolie wird vor oder nach dem Beschichten entfernt.

Vorzugsweise erfolgt das Beschichten der Nicht-Sichtseite 16 des Verkleidungsmaterials 14 mit dem aktivierbaren Material 17, bevor das Verkleidungsmaterial auf seine in Figur 1B beispielhafte Form zugeschnitten wird, das heißt, es wird zunächst beschichtet und sodann das beschichtete Verkleidungsmaterial 14 zugeschnitten (konfektioniert). Das Zuschneiden kann durch Schneiden oder Stanzen erfolgen.

In einem weiteren Verfahrensschritt, dessen Ergebnis in Figur 1C dargestellt ist, erfolgt ein Umspritzen, vorzugsweise Umschäumen des Lenkradskeletts 10 oder Teile von diesem, insbesondere dem Lenkradkranz 13, mit einem Matrixmaterial 18. Für diesen Prozessschritt kommen bekannte Spritzgussverfahren unter Verwendung von Spritzgusswerkzeugen zum Einsatz. Produkt dieses Prozessschritts ist somit eine Matrix 18, in welcher das Lenkradskelett eingebettet vorliegt. Die Matrix 18 definiert die gewünschte Form des Lenkrads und berücksichtigt dabei insbesondere ergonomische Anforderungen, Sicherheitserfordernisse und optische Gestaltungsaspekte. Ein umschäumtes Lenkradskelett wird in der Fachsprache auch als Lenkradschäumling bezeichnet. Als Matrixmaterial 18 kann etwa eines der für das aktivierbare Material genannten Materialien verwendet werden. Insbesondere wird ein thermoplastisches Polymer, beispielsweise Polyurethan, eingesetzt. Sämtliche der vorgenannten Materialien können mit einem physikalischen Aufschäumverfahren aufgeschäumt werden, indem die Polymermasse beispielsweise mit superkritischem CO₂ gesättigt wird und dieses unter schlagartigem Druckabfall und/oder schlagartiger Temperaturerhöhung freigesetzt wird. Einige der vorgenannten Materialien können auch chemisch aufgeschäumt werden, indem die Polymerzusammensetzung beispielsweise unter Erwärmung eine gasförmige Komponente freisetzt. Chemische und physikalische Aufschäumverfahren beziehungsweise Umschäumverfahren sind dem Fachmann bekannt.

In einem anschließenden Verfahrensschritt erfolgt ein Aufbringen des beschichteten Materials 14 auf das umspritzte Lenkradskelett 13 (dem Lenkradschäumling), insbesondere dem Lenkradkranz 13. Dabei wird das Verkleidungsmaterial 14 so angeordnet, dass seine Nicht-Sichtseite, also seine beschichtete Seite, dem umspritzten Lenkradskelett 10, 13 zugewandt ist. Vorzugsweise werden vor dem Aufbringen des beschichteten Verkleidungsmaterials 14 auf das umspritzte Lenkradskelett 10 die kurzen Enden des Zuschnitts des Beschichtungsmaterials 14 miteinander verbunden, beispielsweise genäht, geklebt oder geschweißt. Dieser Vorgang kann maschinell erfolgen. Nach dem Aufbringen des beschichteten Verkleidungsmaterials 14 auf das umspritzte Lenkradskelett 10 werden die Längsränder 22 des Verkleidungsmaterials 14 miteinander verbunden, um eine Verbindungsstelle beziehungsweise Naht 23 zu erzeugen. Auch hierfür kann das Verbinden durch Nähen (bevorzugt), Kleben oder Schweißen erfolgen. Das Ergebnis des Aufbringens des Verkleidungsmaterials 14 auf den umspritzten Lenkradkranz 13 ist in Figur 1D dargestellt. Hier sind mit den Bezugszeichen 17 das noch nicht aktivierte aktivierbare Material bezeichnet und mit 23 die der Längsseiten 22 des Verkleidungsmaterials 14.

In einem anschließenden Prozessschritt erfolgt ein Aktivieren des aktivierbaren Materials 17, um eine stoffschlüssige Verbindung zwischen dem Verkleidungsmaterial 14 und dem das Lenkradskelett 10 umhüllenden Matrixmaterial 18 zu erzeugen. Die Art der Aktivierung richtet sich nach der Art des aktivierbaren Materials und kann thermische Beaufschlagung, Bestrahlung, insbesondere Infrarotbestrahlung, Druckbeaufschlagung, Pressen, chemische Aktivierung etc. umfassen. Sofern beispielsweise das aktivierbare Material 17 ein Schmelzklebstoff ist, erfolgt die Aktivierung der Klebeverbindung durch externe Wärmezufuhr, beispielsweise in einem Ofen, oder durch IR-Bestrahlung. In einer speziellen Ausführung ist das Lenkrad mit einer Lenkradheizeinrichtung ausgestattet. In diesem Fall kann die thermische Aktivierung des aktivierbaren Materials 17 unter Verwendung der Lenkradheizeinrichtung erfolgen. Die angewendete Aktivierungstemperatur sollte an die Temperaturbeständigkeit des Verkleidungsmaterials angepasst sein.

Das Ergebnis des Aktivierungsschritts ist in Figur 1E dargestellt. Hier ist mit 17' das aktivierte und aufgeschäumte Material bezeichnet, das im dargestellten Beispiel nur eine geringe Expansion infolge der Aktivierung vollzogen hat. Ein alternatives Beispiel zeigt Figur 1F, worin das aktivierte Material 17' deutlich stärker expandiert (aufgeschäumt) ist. Das Maß der Aufschäumung und Expansion kann unter anderem durch die Schichtdicke x (siehe Figur 1B), mit der das aktivierbare Material 17 auf das Verkleidungsmaterial 14 beschichtet wurde, eingestellt werden. Möglich ist auch, unterschiedliche Schichtdicken x über die zu beschichtende Fläche des Verkleidungsmaterials 14 vorzusehen, um unterschiedliche Expansionsgrade im Produkt zu erhalten. Auf diese Weise lassen sich beispielsweise unterschiedliche haptische Eigenschaften entlang des Umfangs des Lenkradkranzes 13 erzeugen.

Nach der Aktivierung liegt das Lenkrad 100 als Endprodukt vor und kann gegebenenfalls mit weiteren Nachrüstungen insbesondere in einem Kraftfahrzeug montiert werden.

Eine zweite Ausgestaltung des erfindungsgemäßen Verfahrens zum Herstellen eines Lenkrads 100 wird anhand verschiedener Prozessstufen und Zwischenprodukte in Figur 2 dargestellt. Dabei sind übereinstimmende Elemente mit den gleichen Bezugszeichen wie in Figur 1 bezeichnet und werden nicht noch einmal im Einzelnen erläutert. Es wird im Folgenden nur auf die Unterschiede eingegangen. Das Verfahren nach Figur 2 unterscheidet sich von dem gemäß Figur 1, indem ein Reißverschluss zum Verbinden der Längsränder des Verkleidungsmaterials verwendet wird.

Figur 2A zeigt wiederum eine Schnittansicht durch den Lenkradkranz 13 eines Lenkradskeletts 10. Dieses wird, wie in Figur 1 beschrieben, mit einer Matrix 18 umspritzt oder umschäumt (siehe Figur 2B). In der vorliegenden optionalen Ausgestaltung ist die Matrix 18 mit einer Ausnehmung oder Nut 19 ausgebildet, die insbesondere entlang einer rückwärtigen Seite des Lenkradkranzes 13 verläuft. Die Aufgabe der Ausnehmung 19 ist, den Reisverschluss aufzunehmen und eine Erhöhung durch diesen zu vermeiden.

Gemäß der hier dargestellten Ausgestaltung der Erfindung wird das Verkleidungsmaterial 14 auf seiner bereits mit dem aktivierbaren Material 17 beschichteten Nicht-Sichtseite 16 mit Reißverschlusshälften 20 ausgestattet (Figur 2C). Beispielsweise werden die Reißverschlusshälften 20 entlang der Längsränder 22 des Verkleidungsmaterials 14 angeordnet und mit diesem verbunden, beispielsweise vernäht. Dabei sind die Reißverschlusshälften 20 so angeordnet, dass Reißverschlusszähne 21 in Richtung der offenen Längsränder 22 des Verkleidungsmaterials 14 weisen. Die Reißverschlusszähne 21 können durch die Längsränder 22 des Verkleidungsmaterials 14 verdeckt sein (bevorzugt) oder freiliegen. Anders als in Figur 2C dargestellt, kann das Beschichten des Verkleidungsmaterials 14 mit dem aktivierbaren Material 17 auch nach dem Aufbringen der Reißverschlusshälften 20 erfolgen. Dieses ist jedoch mit einem höheren Prozessaufwand verbunden.

Figur 2D zeigt den Prozessschritt des Aufbringens des beschichteten und mit den Reißverschlusshälften 20 versehenen Verkleidungsmaterials 14 auf das mit dem Matrixmaterial 18 umspritzte Lenkradskelett 10. Das Aufbringen erfolgt so, dass die Reißverschlusshälften 20 über der Ausnehmung 19 des Matrixmaterials 18 angeordnet werden. Anschließend erfolgt ein Schließen der Reißverschlusshälften 22, indem ein nicht dargestellter Reißverschlussschieber über die Zahnreihen der Reißverschlusshälften 20 geführt wird, sodass die Zähne 21 in bekannter Weise in wechselseitigem Eingriff miteinander gelangen. Figur 2E zeigt den Zustand, bei dem der Reißverschluss teilweise geschlossen ist. Figur 2F zeigt eine Schnittansicht durch den Lenkradkranz 13 mit aufgebrachtem Verkleidungsmaterial 14 und bereits geschlossenem Reißverschluss 20. Erkennbar werden die Reißverschlusshälften 20 so in der Ausnehmung 19 der Matrix 18 aufgenommen, dass der Reißverschluss im Produkt nicht nach außen vorwölbt. Ferner ist erkennbar, dass die Längsränder 22 des Verkleidungsmaterials 14 als Stoßkanten aneinander anliegen und die Reißverschlusshälften 20 verdecken. Im fertiggestellten Lenkrad ist der Reißverschluss 20 somit weder sichtbar noch ertastbar.

Eine Variante zu der in Figur 2F gezeigten Ausführung zeigt Figur 2G. Hier ist die Ausnehmung 19 in der Matrix 18 mit einer größeren Tiefe ausgebildet. Dies ermöglicht, dass der Reißverschluss nach seinem Schließen in die Ausnehmung 19 eingestülpt wird und somit vollständig von der Ausnehmung 19 aufgenommen wird. In dieser Ausführungsvariante werden die Reißverschlusshälften 20 zunächst nicht durch die Längsränder 22 des Verkleidungsmaterials 14 verdeckt. Vielmehr werden sie erst nach dem Schließen der Reißverschlusshälften und Einstülpen in die Ausnehmung 19 durch die Längsränder 22 des Verkleidungsmaterials 14 verdeckt. Die Verwendung einer tieferen Ausnehmung 19 in der Matrix 18 ermöglicht auch die Verwendung von Profil-Reißverschlusstypen, die gegenüber Spiral-Reißverschlüssen dicker sind. Auch in dieser Ausführung ist der Reißverschluss 20 im fertiggestellten Lenkrad weder sichtbar noch ertastbar.

Anders als in den Ausführungen nach Figur 2E oder 2F kann der Reißverschluss jedoch auch freiliegen und somit sichtbar sein. Dies ermöglicht die Erzeugung spezieller gestalterischer Effekte, beispielsweise hinsichtlich Farbdesign durch Verwendung kontrastfarbiger oder fluoreszierender Reißverschlüsse.

Abschließend erfolgt auch bei der in Figur 2 dargestellten Ausführung des Verfahrens das Aktivieren des aktivierbaren Materials 17, um eine stoffschlüssige Verbindung, insbesondere Klebeverbindung zwischen dem Verkleidungsmaterial 14 und der Matrix 18 herzustellen und das fertige Lenkrad 100 zu erhalten. Durch die Verwendung des Reißverschlusses wird das Verbinden der Längsränder 22 nach Aufbringen des Verkleidungsmaterials gegenüber einem beispielsweise manuellen Nähvorgang deutlich vereinfacht. Zudem ist das Schließen mittels Reißverschluss hinsichtlich geringerer Toleranzen besser reproduzierbar und gewährleistet eine gleichmäßige Schließkraft.

Das fertige Lenkrad 100 weist folgende Schichtfolge auf: Lenkradskelett 10 / Matrix 18/ aktiviertes Material 17' (stoffschlüssige Verbindung) / Verkleidungsmaterial 14. Optional kann zwischen dem Verkleidungsmaterial 14 und dem aktivierbaren beziehungsweise aktivierten Material 17 noch eine Grundierung vorgesehen sein, welche beispielsweise ein Durchschlagen oder Durchtreten des aktivierbaren Materials 17 durch das Verkleidungsmaterial 14 auf seine Sichtseite 15 verhindert. Nachfolgend wird die Erfindung in konkreten Ausführungsbeispielen erläutert.

### Beispiel 1

Auf die Rückseite einer Lederhaut (Verkleidungsmaterial) wurde ein thermoplastisches Polyurethanpulver als aktivierbares Material aufgewalzt oder aufgestreut und mithilfe von IR-Strahlung als Kaschierung fest mit dem Leder verbunden. Sodann wurde das so beschichtete Leder durch Stanzen zugeschnitten. An den Längsrändern des Leders wurden Reißverschlusshälften aufgenäht. Der so ausgestattete Lederzuschnitt wurde auf einen mit einer Polyurethanmatrix umschäumten Lenkradkranz eines Lenkradskeletts aufgebracht und die Reißverschlusshälften geschlossen. Die Aktivierung des Polyurethanpulvers erfolgte mittels Infrarotbestrahlung bei 100 bis 120 °C für 5 Minuten. Nach Abkühlung wurde eine gleichmäßige Verklebung zwischen dem Leder und der Polyurethanmatrix bei hoher Festigkeit der Verklebung erhalten.

### Beispiel 2

Ein Polyimidcopolymer-Pulver wurde auf einem Trägernetz aufgewalzt und bei 130 °C angeschmolzen. Anschließend wurde das so erhaltene Laminat auf die Nicht-Sichtseite eines Leders unter Ausübung von leichtem Druck und Wärme aufgebracht. Anschließend wurde das Leder konfektioniert und Reißverschlusshälften an Längsrändern des Lederzuschnitts aufgenäht. In einer Variante wurden keine Reißverschlusshälften verwendet. Nach Aufbringen des Leders auf ein mit einer PU-Matrix umschäumtes Lenkrad wurden der Reißverschluss geschlossen beziehungsweise bei der Variante ohne Reißverschluss die Längsränder genäht. Das Gefüge wurde in einem Ofen bei 115 °C für 10 Minuten erwärmt, um das Polyimidcopolymerpulver zu aktivieren. Nach Abkühlung wurde eine gleichmäßige und stabile Verbindung des Leders mit der Polyurethanmatrix erhalten.

### Bezugszeichenliste

- 100: Lenkrad
- 10: Lenkradskelett
- 11: Lenkradnabe
- 12: Lenkradspeiche
- 13: Lenkradkranz
- 14: Verkleidungsmaterial
- 15: Sichtseite
- 16: Nichtsichtseite
- 17: aktivierbares Material
- 17': aktiviertes Material (aktivierbares Material nach Aktivierung)
- 18: Matrix / Matrixmaterial
- 19: Ausnehmung, Nut
- 20: Reißverschlusshälfte
- 21: Reißverschlusszähne
- 22: Längsrand
- 23: Verbindungsstelle / Naht

## Patentansprüche

1. Verfahren zum Herstellen eines verkleideten Lenkrads (100) für ein Fahrzeug mit den Schritten:
- Bereitstellen eines mit einem Matrixmaterial (18) umspritzten Lenkradskeletts (10, 13),
- Beschichten eines Verkleidungsmaterials (14) auf seiner Nichtsichtseite (16) mit einem aktivierbaren Material (17), wobei es sich bei dem Verkleidungsmaterial um Leder, Kunstleder oder ein Textilmaterial handelt,
- Aufbringen des beschichteten Verkleidungsmaterials (14) auf das umspritzte Lenkradskelett (10, 13), sodass seine Nichtsichtseite (16) dem umspritzten Lenkradskelett (10, 13) zugewandt ist,
- Verbinden von Längsrändern (22) des Verkleidungsmaterials (14) miteinander und
- Aktivieren des aktivierbaren Materials (17) unter Erzeugung einer stoffschlüssigen Verbindung zwischen dem Verkleidungsmaterial (14) und dem Matrixmaterial (18),
**dadurch gekennzeichnet, dass** das aktivierbare Material (17) ein aufschäumbares Material ist, das bei der Aktivierung aufschäumt.

2. Verfahren nach dem vorhergehenden Anspruch, **dadurch gekennzeichnet, dass** das aktivierbare Material (17) ein aktivierbarer Klebstoff ist, und dass die stoffschlüssige Verbindung eine Klebeverbindung ist.

3. Verfahren nach einem der vorhergehenden Ansprüche, **dadurch gekennzeichnet, dass** das Aktivieren durch thermische Behandlung und/oder Bestrahlung erfolgt.

4. Verfahren nach einem der vorhergehenden Ansprüche, **dadurch gekennzeichnet, dass** das Verbinden von Längsrändern (22) des Verkleidungsmaterials (14) ein Vernähen umfasst.

5. Verfahren nach einem der vorhergehenden Ansprüche, **dadurch gekennzeichnet, dass** das Verbinden von Längsrändern (22) des Verkleidungsmaterials (14) das Schließen von Reißverschlusshälften (20) umfasst, welche vor dem Aufbringen des Verkleidungsmaterials (14) an den Längsrändern (22) des Verkleidungsmaterials (14) angebracht werden.

6. Verfahren nach Anspruch 4 in Verbindung mit Anspruch 5, **dadurch gekennzeichnet, dass** das Verbinden von Längsrändern (22) des Verkleidungsmaterials (14) das Schließen von Reißverschlusshälften und in einem späteren Verfahrensschritt ein Vernähen der Längsränder (22) durch Übernähen eines Reißverschlusses umfasst.

7. Verfahren nach Anspruch 5 oder 6, **dadurch gekennzeichnet, dass** ein Spiralreißverschluss, insbesondere ein Kunststoff-Spiralreißverschluss, verwendet wird.

8. Verfahren nach einem der vorhergehenden Ansprüche, **dadurch gekennzeichnet, dass** das Bereitstellen des mit einem Matrixmaterial (18) umspritzten Lenkradskeletts (10, 13) ein Umschäumen des Lenkradskeletts (10, 13) mit dem Matrixmaterial (18) umfasst.

9. Verfahren nach einem der vorhergehenden Ansprüche, **dadurch gekennzeichnet, dass** das das Lenkradskelett (10, 13) umhüllende Matrixmaterial (18) im Bereich der miteinander verbundenen Längsränder (22) des Verkleidungsmaterials (14) eine Ausnehmung (19) aufweist.

10. Verfahren nach einem der vorhergehenden Ansprüche, **dadurch gekennzeichnet, dass** das Verkleidungsmaterial (14) vor oder nach dem Beschichten und vor dem Aufbringen auf das Lenkradskelett (10, 13) zugeschnitten wird.

11. Verfahren nach einem der vorhergehenden Ansprüche, **dadurch gekennzeichnet, dass** vor dem Aufbringen des beschichteten Verkleidungsmaterials (14) auf das mit dem Matrixmaterial (18) umspritzte Lenkradskelett (10, 13) auch das Matrixmaterial (18) zumindest stellenweise mit einem aktivierbaren Material beschichtet wird.

12. Verfahren nach einem der vorhergehenden Ansprüche, **dadurch gekennzeichnet, dass** statt des Verkleidungsmaterials das Matrixmaterial nach dem zumindest abschnittsweisen Umspritzen des Lenkradskeletts auf seiner Außenseite mit einem aktivierbaren Material beschichtet wird, und das Verkleidungsmaterial auf das mit dem beschichteten Matrixmaterial umspritzte Lenkradskelett aufgebracht wird, so dass die beschichtete Außenseite des Matrixmaterials dem Verkleidungsmaterial zugewandt ist.

13. Verkleidetes Lenkrad (100), herstellbar mit einem Verfahren nach einem der vorhergehenden Ansprüche.

## Claims

1. Method for producing a covered steering wheel (100) for a vehicle, having the steps of:
- providing a steering wheel skeleton (10, 13) that has been encapsulated by injection moulding with a matrix material (18),
- coating a covering material (14) on its non-visible side (16) with an activatable material (17), wherein the covering material is leather, imitation leather or a textile material,
- applying the coated covering material (14) to the steering wheel skeleton (10, 13) that has been encapsulated by injection moulding, with the result that the non-visible side (16) of said covering material faces the steering wheel skeleton (10, 13) that has been encapsulated by injection moulding,
- connecting longitudinal edges (22) of the covering material (14) to one another, and
- activating the activatable material (17) to create a material bond between the covering material (14) and the matrix material (18),
**characterized in that** the activatable material (17) is a foamable material that foams upon activation.

2. Method according to the preceding claim, **characterized in that** the activatable material (17) is an activatable adhesive, and **in that** the material bond is an adhesive bond.

3. Method according to either of the preceding claims, **characterized in that** the activating is effected by thermal treatment and/or irradiation.

4. Method according to one of the preceding claims, **characterized in that** the connecting of longitudinal edges (22) of the covering material (14) involves stitching them together.

5. Method according to one of the preceding claims, **characterized in that** the connecting of longitudinal edges (22) of the covering material (14) involves the closing of zip fastener halves (20), which are attached to the longitudinal edges (22) of the covering material (14) before the covering material (14) is applied.

6. Method according to Claim 4 in conjunction with Claim 5, **characterized in that** the connecting of longitudinal edges (22) of the covering material (14) involves the closing of zip fastener halves and, in a later method step, involves stitching together the longitudinal edges (22) by overstitching a zip fastener.

7. Method according to Claim 5 or 6, **characterized in that** a spiral zip fastener, in particular a plastic spiral zip fastener, is used.

8. Method according to one of the preceding claims, **characterized in that** the providing of the steering wheel skeleton (10, 13) that has been encapsulated by injection moulding with a matrix material (18) involves encapsulating the steering wheel skeleton (10, 13) with the foam of the matrix material (18).

9. Method according to one of the preceding claims, **characterized in that** the matrix material (18) sheathing the steering wheel skeleton (10, 13) has a recess (19) in the region of the interconnected longitudinal edges (22) of the covering material (14) .

10. Method according to one of the preceding claims, **characterized in that** the covering material (14) is cut to size before or after it is coated and before it is applied to the steering wheel skeleton (10, 13) .

11. Method according to one of the preceding claims, **characterized in that** the matrix material (18) is also coated at least at isolated points with an activatable material before the coated covering material (14) is applied to the steering wheel skeleton (10, 13) that has been encapsulated by injection moulding with the matrix material (18).

12. Method according to one of the preceding claims, **characterized in that** the matrix material, instead of the covering material, is coated on its outer side with an activatable material after the encapsulation of the steering wheel skeleton by injection moulding at least in certain portions, and the covering material is applied to the steering wheel skeleton that has been encapsulated by injection moulding with the coated matrix material, with the result that the coated outer side of the matrix material faces the covering material.

13. Covered steering wheel (100) that can be produced by a method according to one of the preceding claims.

## Revendications

1. Procédé de fabrication d'un volant de direction revêtu (100) pour un véhicule, comprenant les étapes suivantes :
- la fourniture d'une ossature de volant de direction (10, 13) surmoulée avec un matériau de matrice (18),
- l'enduction d'un matériau de revêtement (14) sur son côté non visible (16) avec un matériau activable (17), le matériau de revêtement consistant en du cuir, du cuir artificiel ou un matériau textile,
- l'application du matériau de revêtement enduit (14) sur l'ossature de volant de direction surmoulée (10, 13), de telle sorte que son côté non visible (16) est tourné vers l'ossature de volant de direction surmoulée (10, 13),
- le raccordement de bords longitudinaux (22) du matériau de revêtement (14) l'un avec l'autre, et
- l'activation du matériau activable (17), une liaison par accouplement de matière étant ainsi produite entre le matériau de revêtement (14) et le matériau de matrice (18),
**caractérisé en ce que** le matériau activable (17) est un matériau moussable, qui mousse lors de l'activation.

2. Procédé selon la revendication précédente, **caractérisé en ce que** le matériau activable (7) est un adhésif activable, et **en ce que** la liaison par accouplement de matière est une liaison adhésive.

3. Procédé selon l'une quelconque des revendications précédentes, **caractérisé en ce que** l'activation a lieu par traitement thermique et/ou exposition à un rayonnement.

4. Procédé selon l'une quelconque des revendications précédentes, **caractérisé en ce que** le raccordement de bords longitudinaux (22) du matériau de revêtement (14) comprend une couture.

5. Procédé selon l'une quelconque des revendications précédentes, **caractérisé en ce que** le raccordement de bords longitudinaux (22) du matériau de revêtement (14) comprend la fermeture de moitiés d'une fermeture à glissière (20), qui sont disposées sur les bords longitudinaux (22) du matériau de revêtement (14) avant l'application du matériau de revêtement (14).

6. Procédé selon la revendication 4 en connexion avec la revendication 5, **caractérisé en ce que** le raccordement de bords longitudinaux (22) du matériau de revêtement (14) comprend la fermeture de moitiés d'une fermeture à glissière et, dans une étape de procédé ultérieure, une couture des bords longitudinaux (22) par surpiquage d'une fermeture à glissière.

7. Procédé selon la revendication 5 ou 6, **caractérisé en ce qu'**une fermeture à glissière spiralée, notamment une fermeture à glissière spiralée en matière plastique, est utilisée.

8. Procédé selon l'une quelconque des revendications précédentes, **caractérisé en ce que** la fourniture de l'ossature de volant de direction (10, 13) surmoulée avec un matériau de matrice (18) comprend un enrobage par moussage de l'ossature de volant de direction (10, 13) avec le matériau de matrice (18).

9. Procédé selon l'une quelconque des revendications précédentes, **caractérisé en ce que** le matériau de matrice (18) enveloppant l'ossature de volant de direction (10, 13) présente un évidement (19) dans la zone des bords longitudinaux (22) du matériau de revêtement (14) raccordés l'un à l'autre.

10. Procédé selon l'une quelconque des revendications précédentes, **caractérisé en ce que** le matériau de revêtement (14) est découpé avant ou après l'enduction et avant l'application sur l'ossature de volant de direction (10, 13).

11. Procédé selon l'une quelconque des revendications précédentes, **caractérisé en ce qu'**avant l'application du matériau de revêtement enduit (14) sur l'ossature de volant de direction (10, 13) surmoulée avec le matériau de matrice (18), le matériau de matrice (18) est également enduit au moins par endroits avec un matériau activable.

12. Procédé selon l'une quelconque des revendications précédentes, **caractérisé en ce qu'**au lieu du matériau de revêtement, le matériau de matrice est enduit sur son côté extérieur avec un matériau activable après le surmoulage au moins en sections de l'ossature de volant de direction, et le matériau de revêtement est appliqué sur l'ossature de volant de direction surmoulée avec le matériau de matrice enduit, de telle sorte que le côté extérieur enduit du matériau de matrice est tourné vers le matériau de revêtement.

13. Volant de direction revêtu (100), pouvant être fabriqué par un procédé selon l'une quelconque des revendications précédentes.
